# EUROPEAN PATENT SPECIFICATION

(11) **EP 4 383 428 B1**
(45) Date of publication and mention of the grant of the patent: **02.09.2026**
(21) Application number: 23843270.2
(22) Date of filing: 12.07.2023
(51) Int. Cl.: H01M 50/256, H01M 50/502, H01M 50/30, H01M 50/211, H01M 50/358, H01M 50/15, H01M 50/244, H01M 50/264, H01M 50/105

(54) **BATTERY ASSEMBLY, AND BATTERY PACK AND VEHICLE INCLUDING SAME**
BATTERIEANORDNUNG SOWIE BATTERIEPACK UND FAHRZEUG DAMIT
ENSEMBLE BATTERIE, ET BLOC-BATTERIE ET VÉHICULE LES COMPORTANT

(30) Priority: 20.07.2022 KR 20220089871; 20.07.2022 KR 20220089905; 20.07.2022 KR 20220089906; 20.07.2022 KR 20220089909; 27.04.2023 KR 20230055792
(43) Date of publication of application: 12.06.2024
(73) Proprietor: LG Energy Solution, Ltd., Seoul 07335 (KR)
(72) Inventor: KWON, Woo-Yong, Daejeon 34122 (KR); KANG, Jong-Mo, Daejeon 34122 (KR); KIM, Seung-Joon, Daejeon 34122 (KR); KIM, In-Soo, Daejeon 34122 (KR); PARK, Jin-Yong, Daejeon 34122 (KR); CHUNG, Se-Yun, Daejeon 34122 (KR)
(74) Representative: Plasseraud IP
(86) International application number: PCT/KR2023/009984
(87) International publication number: WO 2024/019420

(56) References cited:
- EP-A1- 4 300 686
- EP-A1- 4 383 419
- WO-A1-2021/187806
- WO-A1-2022/126841
- JP-A- 2016 066 538
- JP-A- H1 092 405
- KR-A- 20120 132 338
- KR-A- 20190 134 756
- US-A1- 2010 035 142

## Description

### TECHNICAL FIELD

The present application claims priority to Korean Patent Application Nos. 10-2022-0089871, 10-2022-0089905, 10-2022-0089906, and 10-2022-0089909 filed on July 20, 2022 and Korean Patent Application No. 10-2023-0055792 filed on April 27, 2023 in the Republic of Korea.

The present disclosure relates to a battery assembly, and a battery pack and a vehicle including the same and, more specifically, relates to a battery assembly applicable to a battery pack manufactured by a CTP (cell-to-pack) method, and a battery pack and a vehicle including the same.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. The output voltage of a battery cell, which is a basic unit of charging and discharging of the secondary batteries, is approximately 2.5V to 4.2V.

Recently, secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series or parallel and reconnecting multiple battery modules configured above in series or parallel, has been widely used.

However, as disclosed in Korean Patent Publication No. 10-2379227, Korean Unexamined Patent Publication No. 10-2022-0052183, etc., in the existing technology, since a battery pack is manufactured by storing battery cells in a box-shaped metal case to configure battery modules and then storing these battery modules in a battery pack case, there is a problem in which the weight and volume of the entire battery pack increases and in which the energy density of the battery pack decreases.

On the other hand, if the existing CTP (cell-to-pack) method of mounting multiple battery cells directly into the battery pack case is applied to increase the energy density of the battery pack, it is difficult to handle the multiple battery cells simultaneously, and there is a risk of damage to the battery cells in the process of mounting the same. Moreover, in the existing CTP method, since structures for mounting the battery cells are arranged redundantly inside the case, there are problems of deteriorating the effect of reducing the weight and volume of the battery pack and increasing manufacturing costs.

Other prior art documents comprise document WO2021/187806 which describes a battery assembly comprising battery cell stacks in housings where the battery assembly has a cover which may function as a handle of the battery assembly and comprises grip grooves for a worker to insert a finger or a gripping device to move the battery assembly and/or transport the battery pack, document US 2010/035142 that describes battery modules equipped with "variable grips" stacked to form a battery assembly. Document KR2019 0134756 A discloses a battery assembly where a support structure of battery cells has side walls provided with openings to receive handle elements.

### DISCLOSURE

### Technical Problem

The present disclosure has been designed to solve the problems of the related art, and therefore one aspect of the present disclosure provides a battery assembly capable of reducing the overall weight and volume of an electrical device including a plurality of battery cells and increasing the energy density of the electrical device, and a battery pack and a vehicle including such a battery assembly.

Another aspect of the present disclosure provides a battery assembly capable of preventing damage to a plurality of battery cells, which is caused during mounting and using the battery cells in a case, and facilitating handling and installation of the battery cells, and a battery pack and a vehicle including such a battery assembly.

Another aspect of the present disclosure provides a battery assembly capable of reducing manufacturing costs by simplifying and lightening the structures required for installation of the battery cells, and a battery pack and a vehicle including such a battery assembly.

### Technical Solution

In one aspect of the present disclosure, there is provided a battery assembly including: a plurality of stacked cell units each including at least one battery cell; and a support structure configured to support the plurality of cell units and maintain a stacked state of the plurality of cell units, wherein the support structure includes coupling portion configured to be coupled to a transport structure used to transport the plurality of cell units.

Each of the plurality of cell units further includes a cell cover having a slot into which the at least one battery cell is inserted and an opening through which an electrode lead of the at least one battery cell inserted into the slot is exposed, and covering the at least one battery cell inserted into the slot.

In an embodiment, the cell cover may further include at least one vent portion configured to vent gas from the at least one battery cell inserted into the slot.

In an embodiment, each of the plurality of cell units may further include: a bus bar electrically connected to the electrode lead; and a bus bar frame disposed at the opening of the cell cover and supporting the bus bar.

The support structure includes: a first side wall disposed adjacent to a first cell unit located at the outermost on one side of the plurality of cell units; a second side wall disposed adjacent to a second cell unit located at the outermost on the other side of the plurality of cell units; and an integrated end cover having one end connected to the first side wall and the other end connected to the second side wall and configured to cover all openings of two or more of the cell covers of the plurality of cell units.

In an embodiment, the integrated end cover may include: a main body portion configured to cover the openings; and a support portion extending from the main body portion toward the lower end of the plurality of cell units to support the lower end of the plurality of cell units, and the transport structure coupled to the coupling portion of the support structure may be configured to be located at the upper end of the plurality of cell units.

**In** an embodiment, the integrated end cover has vent holes for venting gas, which are provided at respective portions of the integrated end cover corresponding to the openings.

The support structure further includes a support band having one end in close contact with the first side wall and the other end in close contact with the second side wall so as to support the plurality of cell units.

The coupling portion of the support structure is configured to be provided at both ends of the support band and to be detachably coupled to the transport structure.

**In** an embodiment, the transport structure may have at least one handle and may be configured to be coupled to the coupling portion of the support structure.

**In** an embodiment, the transport structure may include a coupling frame coupled to the at least one handle to support the at least one handle, and detachably coupled to the coupling portion of the support structure.

**In** an embodiment, the coupling frame may include: a main frame to which the at least one handle is coupled; and a subframe having one end coupled to the main frame and the other end detachably coupled to the coupling portion of the support structure.

**In** an embodiment, the at least one battery cell may be configured as a pouch-type secondary battery.

A battery pack according to another aspect of the present disclosure includes the battery assembly according to any one of the embodiments described above.

A vehicle according to another aspect of the present disclosure includes the battery assembly according to any one of the embodiments described above.

### Advantageous Effects

According to the present disclosure, multiple battery cells may be configured as a single battery assembly capable of being handled simultaneously by a simplified support structure, thereby facilitating handling of the battery cells and reducing the overall weight and volume of an electrical device including the multiple battery cells, and increasing the energy density of the electrical device.

**In** addition, the support structure may include a coupling portion configured to be coupled to a transport structure used to transport the plurality of cell units, thereby facilitating handling, transport, and mounting of the battery assembly and increasing manufacturing efficiency.

In addition, since the transport structure is configured to be attachable to and detachable from the support structure, a battery pack or electrical device on which the battery assembly is mounted is able to be simplified and lightened.

In addition, since multiple battery cells are partially covered by a cell cover in a simplified structure and directly mounted in a case of a corresponding electrical device, instead of being accommodated in a separate case and then reinstalled into the case of the electrical device, it is possible to further reduce the overall weight and volume of the electrical device, further improve the energy density of the battery pack, prevent damage to the battery cells, which is caused during the process of installing the multiple battery cells directly in the case and using the same, and facilitate the swelling control of the battery cells and the design of gas venting paths.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a diagram illustrating a battery assembly according to an embodiment of the present disclosure, but not according to the invention.
FIG. 2 is an exploded view illustrating the battery assembly shown in FIG. 1.
FIG. 3 is a diagram illustrating a cell unit of a battery assembly according to the invention.
FIG. 4 is an exploded view illustrating the cell unit shown in FIG. 3.
FIG. 5 is a diagram illustrating a cell cover of the cell unit shown in FIG. 4.
FIG. 6 is an enlarged view illustrating area A1 in FIG. 1.
FIG. 7 is an exploded view illustrating a transport structure of the battery assembly shown in FIG. 1.
FIG. 8 is a diagram illustrating a battery assembly according to the invention.
FIG. 9 is a diagram illustrating a state in which a transport structure is separated from the battery assembly shown in FIG. 8.
FIG. 10 is a diagram illustrating a support band of the battery assembly shown in FIG. 8.
FIG. 11 is a diagram illustrating a battery assembly according to another embodiment of the present disclosure. disclosure, but not according to the invention.
FIG. 12 is a diagram illustrating a state in which a transport structure is separated from the battery assembly shown in FIG. 11.
FIG. 13 is a diagram illustrating a battery pack according to an embodiment of the present disclosure, but not according to the invention.
FIG. 14 is a diagram illustrating a vehicle according to the invention.

### BEST MODE

Hereinafter, embodiments of the present disclosure will be described in detail with reference to the accompanying drawings in order to clarify technical solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

For reference, in this specification, terms indicating directions are based on the components shown in the attached drawings and are relative terms that may change depending on the postures or positions of the actual components.

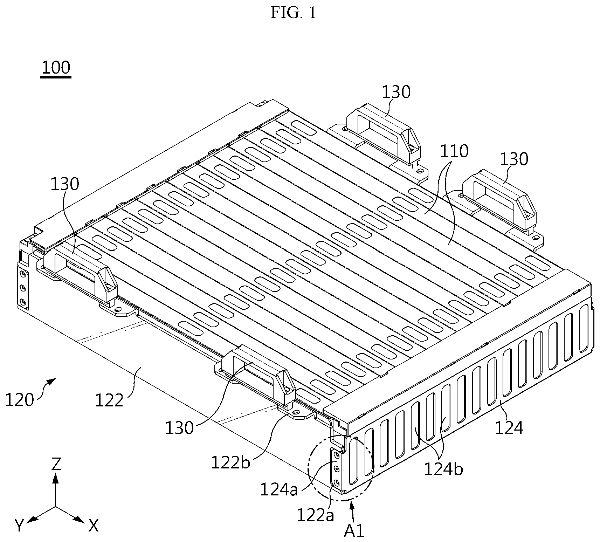

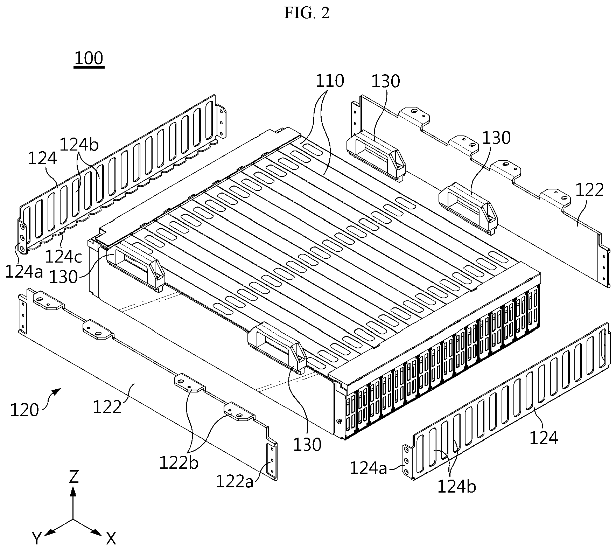

FIG. 1 is a diagram illustrating a battery assembly 100 according to an embodiment of the present disclosure. FIG. 2 is an exploded view illustrating the battery assembly 100 shown in FIG. 1.

As shown in FIGS. 1 and 2, the battery assembly 100 according to an embodiment of the present disclosure includes (not according to them invention) a plurality of cell units 110 and a support structure 120. Depending on the embodiment, the battery assembly 100 may further include a transport structure 130.

The respective cell units 110 may be configured to include at least one battery cell and to be stacked side by side in the width direction (Y-axis direction). As will be described again below, each cell unit 110 may include at least one battery cell that is a basic unit of charging and discharging, and a cell cover that partially covers and supports the battery cell.

The support structure 120 is configured to support the plurality of cell units 110 to maintain the stacked state of the plurality of cell units 110. In addition, the support structure 120 may include a coupling portion configured to be coupled to a transport structure used to transport the plurality of cell units.

In an embodiment, the support structure 120 may include side walls 122 and integrated end covers 124. The side walls 122 and the integrated end covers 124 may be disposed along the lateral perimeter of the plurality of cell units 110 stacked on each other.

In addition, in an embodiment, the support structure 120 may include a pair of side walls 122 and a pair of integrated end covers 124, respectively.

In this case, the side walls 122 may be configured such that each of them is disposed at both ends of the plurality of cell units 110 in the width direction (Y-axis direction) or stacking direction of the plurality of cell units 110, thereby supporting the plurality of cell units 110.

That is, among the pair of side walls, a first side wall may be disposed adjacent to a first cell unit located at the outermost on one side of the plurality of cell units 110, and a second side wall may be disposed adjacent to a second cell unit located at the outermost on the other side of the plurality of cell units 110.

The side walls 122, together with the integrated end covers 124 to be described later, bring the plurality of cell units 110 into close contact with each other to form a single cell unit block capable of being handled simultaneously. In this case, the side walls 122 may evenly distribute the pressure applied to the plurality of cell units 110 throughout the cell units 110.

The side walls 122 may be made of a metal material including aluminum or stainless steel or may be made of a material obtained by a combination of metal and polymer synthetic resin through insert molding.

Each of the integrated end covers 124 may be disposed at both ends of the plurality of cell units 110 in the longitudinal direction (X-axis direction) of the plurality of cell units 110. In addition, the integrated end cover 124 may be configured to have one end connected to the first side wall and the other end connected to the second side wall so as to cover all openings of two or more of the cell covers of the plurality of cell units 110.

To this end, the side wall 122 may include connection portions 122a provided at both ends thereof to be connected to one end or the other end of the integrated end cover 124. Corresponding thereto, the integrated end cover 124 may include a main body portion that covers the openings of the plurality of cell units 110 and a corresponding connection portion 124a extending from the main body portion and connected to the connection portion 122a of the side wall 122.

In an embodiment, the integrated end cover 124 may have vent holes 124b through which gas generated from the battery cells of the cell unit vents, which are formed at respective portions of the integrated end cover 124 corresponding to the openings of the plurality of cell units 110.

In addition, as shown in FIG. 2, the integrated end cover 124 may include a support portion 124c extending from the main body portion toward the lower end of the plurality of cell units 110 so as to support the lower end of the plurality of cell units 110. This integrated end cover 124 may be made of a metal material including aluminum or stainless steel or polymer synthetic resin, or may be made of a material obtained by a combination of metal and polymer synthetic resin through insert molding.

As described above, since the integrated end cover 124 supporting the cell units and integrally covering the openings of the cell units is applied to the battery assembly 100, a unit end cover applied to each cell unit may be omitted, thereby simplifying the manufacturing process thereof.

The transport structure 130 has at least one handle and is configured to be detachably mounted to the support structure 120. The transport structure 130 mounted to the support structure 120 may be configured to be located at the upper end of the plurality of cell units 110.

To this end, each side wall 122 included in the support structure 120 may include a coupling portion 122b provided at the upper end thereof so as to be detachably coupled to a portion of the transport structure 130. In this case, the transport structure 130 may be coupled to the coupling portion 122b of a corresponding side wall 122 in various ways of enabling easy coupling and separation.

This transport structure 130 may be configured to be held by an operator carrying the battery assembly 100 or connected to a predetermined transport device that lifts and transports the battery assembly 100. In addition, the transport structure 130 may be made of a metal material, a polymer synthetic resin, or a combination of these materials with a certain strength.

As will be described again below, the transport structure 130 may be detached and removed from the battery assembly 100 after the transport or installation of the battery assembly 100 is completed.

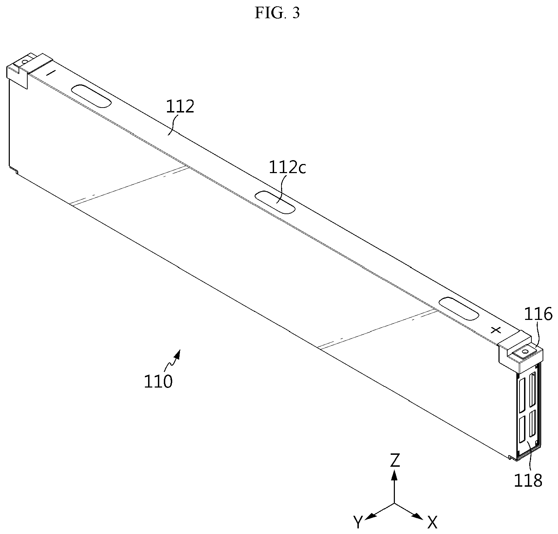

FIG. 3 is a diagram illustrating a cell unit 110 of a battery assembly according to an embodiment of the present disclosure.

As shown in FIG. 3, the cell unit 110 may include a cell cover 112 that partially covers and supports at least one battery cell to maintain the same in an upright state.

The cell cover 112 may have vent portions 112c provided at various positions to vent gas in an intended direction. The vent portion 112c may be configured to form the outer surface of the cell cover 112 and rupture by gas from the battery cell located inside the cell unit 110. For example, the vent portion 112c may be provided by forming notches or grooves in various shapes on the top of the cell cover 112.

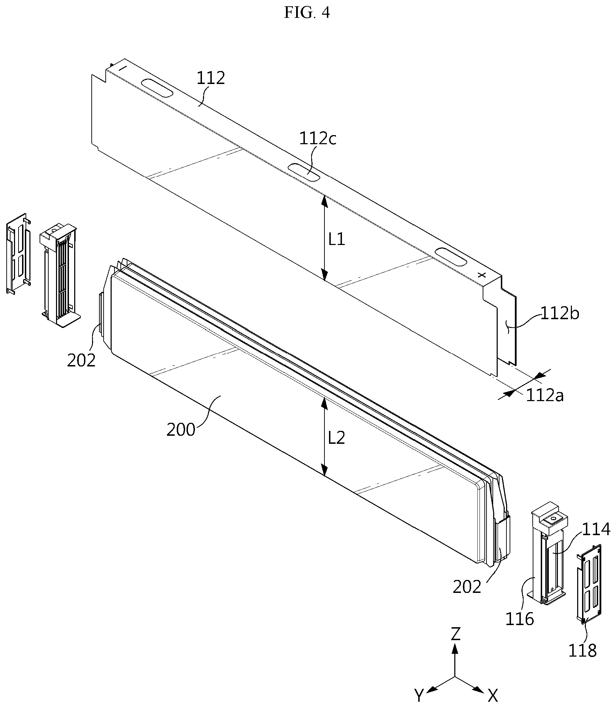

FIG. 4 is an exploded view illustrating the cell unit 110 shown in FIG. 3.

As shown in FIG. 4, the cell unit 110 may include at least one battery cell 200 and a cell cover 112.

The battery cell 200 corresponds to the most fundamental secondary battery capable of being charged and discharged, and may be manufactured by storing an electrode assembly and electrolyte material inside a case and sealing the case. The electrode assembly may be manufactured by interposing a separator between the positive electrode and the negative electrode.

This battery cell 200 may be configured as a pouch-type secondary battery having a predetermined length and height. In addition, an electrode lead 202 electrically connected to the electrode assembly may be provided at both ends of the battery cell 200 in the longitudinal direction (X-axis direction).

The cell cover 112 may be configured to partially cover and support at least one battery cell 200 to maintain the same in an upright state.

For example, as shown in FIG. 4, the cell cover 112 may be configured to partially cover and support three battery cells stacked on each other to maintain the battery cells in an upright state.

To this end, the cell cover 112 may have a slot 112a into which at least one battery cell 200 is inserted and an opening 112b through which the electrode lead 202 of at least one battery cell 200 inserted into the slot 112a is exposed and may be configured to cover at least one battery cell 200 inserted into the slot 112a.

In addition, as described above, the cell cover 112 may include at least one vent portion 112c for venting gas from at least one battery cell 200 inserted into the slot 112a.

The height L1 of the cell cover 112 (or the depth of the slot 112a) may be configured to be greater than the height L2 of the battery cell 200 in an upright state. As a result, the free space produced inside the slot 112a of the cell cover 112 into which the battery cell 200 is inserted may be used as a gas venting passage.

Although it is illustrated in FIG. 4 that three battery cells are covered by one cell cover 112, the number of battery cells covered by the cell cover 112 may vary depending on the scale of the cell cover 112.

In an embodiment, the cell unit 110 may further include a bus bar 114 electrically connected to the electrode lead 202 of the battery cell 200 inserted into the cell cover 112 and a bus bar frame 116 disposed in the opening 122b of the cell cover 112 and supporting the bus bar 114.

In addition, the cell unit 110 may further include an insulating cover 118 that is disposed between the bus bar frame 116 and the integrated end cover 124 so as to prevent short circuit of the bus bar 114. This insulating cover 118 may be made of polymer synthetic resin with insulating properties.

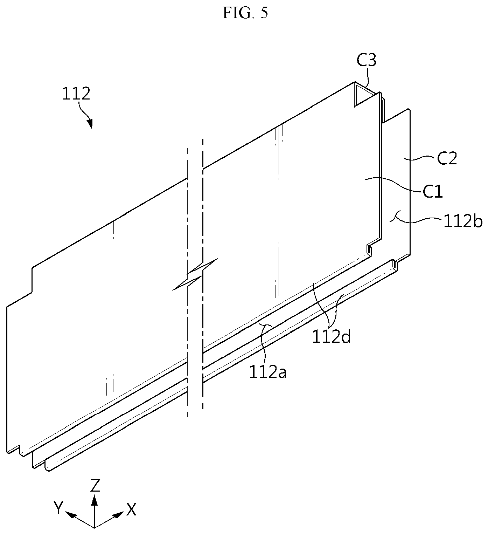

FIG. 5 is a diagram illustrating the cell cover 112 of the cell unit shown in FIG. 4.

As shown in FIG. 5, for example, the cell cover 112 may be configured in an "n" shape or a "u" shape surrounding three sides of the at least one battery cell.

The cell cover 112 may include a first cover portion C1 covering one side of at least one battery cell, a second cover portion C2 covering the other side of the at least one battery cell, and a third cover portion C3 that connects the cover portion C1 and the second cover portion C2 and covers an upper edge portion of the at least one battery cell.

A slot 112a into which the at least one battery cell is inserted and an opening 122b through which an electrode lead of the at least one battery cell inserted into the slot 112a is exposed may be provided between the first cover portion C1 and the second cover portion C2. In addition, the vent portion 112c for venting gas described above may be provided in the third cover portion C3 of the cell cover 112.

In an embodiment, the cell cover 112 may further include blocking portions 112d provided at the entrance of the slot 112a to block removal of the battery cell inserted into the slot 112a. The blocking portions 112d may be configured to protrude from the ends of the first cover portion C1 and the second cover portion C2 toward the entrance of the slot 112a, respectively.

This cell cover 112 may be integrally formed. In this case, the cell cover 112 may be manufactured through a sheet metal process or an injection process.

As described above, the cell cover 112 in a simplified structure may be made of a metal material with higher rigidity than the battery cell case, thereby protecting the battery cell covered by the cell cover from external shock or vibration.

Although not shown in FIGS. 3 to 5 , the cell unit 110 may further include a clamping member configured to clamp the cell cover 112. In this case, the clamping member may be configured to clamp the cell cover 112 into which at least one battery cell is inserted so as to prevent the space between the first cover portion C1 and the second cover portion C2 of the cell cover 112 from opening or prevent the battery cell inserted into the cell cover 112 from being separated from the cell cover 112. This clamping member may be configured as a tape or made of a metal material in a band shape.

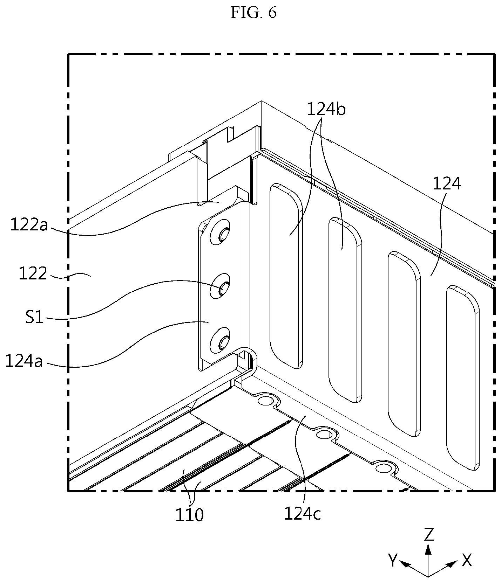

FIG. 6 is an enlarged view illustrating area A1 in FIG. 1.

As shown in FIG. 6, the side wall 122 and the integrated end cover 124 included in the support structure 120 of the battery assembly 100 may be connected to each other so as to support a plurality of cell units 110. To this end, the connection portion 122a of the side wall 122 may have an insertion groove into which the corresponding connection portion 124a of the integrated end cover 124 is inserted.

The corresponding connection portion 124a of the integrated end cover 124 may be inserted into the insertion groove provided in the connection portion 122a of the side wall 122 and then fixed to the connection portion 122a of the side wall 122 by a fastening member S1 such as a screw or bolt.

In addition, the support portion 124c of the integrated end cover 124 may be configured to extend from the main body portion of the integrated end cover 124 toward the lower end of the plurality of cell units 110 to support the lower end of the plurality of cell units 110. In this case, the support portion 124c of the integrated end cover 124 may be configured to support the bus bar frame of the cell unit 110 described above.

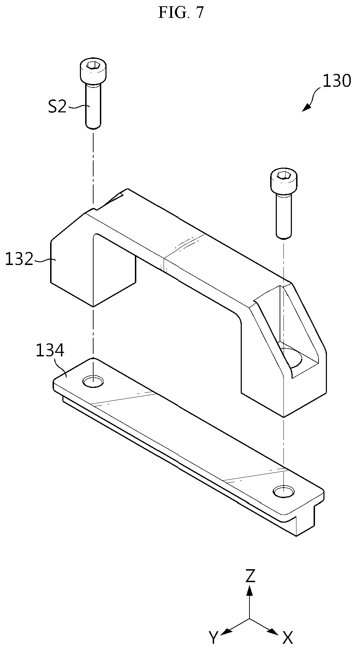

FIG. 7 is an exploded view illustrating the transport structure 130 of the battery assembly shown in FIG. 1.

As shown in FIG. 7, the transport structure 130 may be configured to be detachably mounted to the support structure 120 described above.

To this end, the transport structure 130 may include at least one handle 132 and a coupling frame 134 that supports the handle 132 and is detachably coupled to the support structure 120.

The handle 132 may be configured to enable the operator to hold the battery assembly or connection to a transport device.

The coupling frame 134 may be configured to support the handle 132 so as to prevent deformation of the handle 132. In addition, the coupling frame 134 may be coupled to the coupling portion 112b provided on the side wall 122 of the support structure 120 in a manner of facilitating coupling and separation. For example, the coupling frame 134 may be coupled to the coupling portion 112b of the side wall 122 by a simple fastening member S2 such as a screw or bolt.

As mentioned above, the transport structure 130 may be detached and removed from the support structure 120 after the transport or installation of the battery assembly 100 is completed.

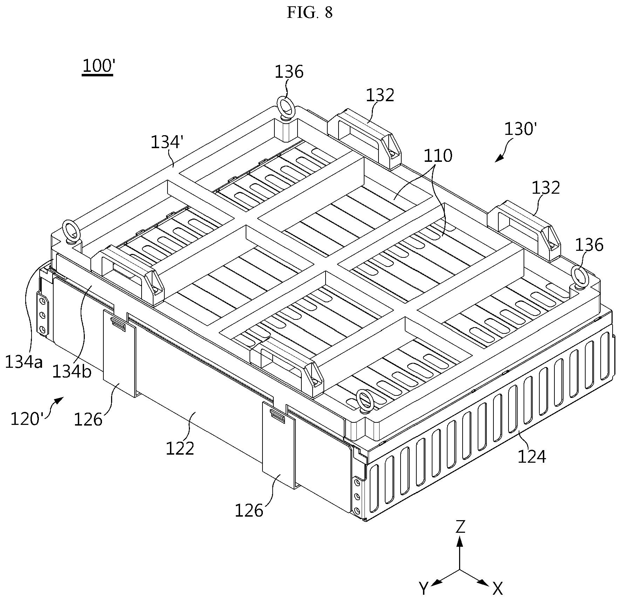

FIG. 8 is a diagram illustrating a battery assembly 100' according to the invention.

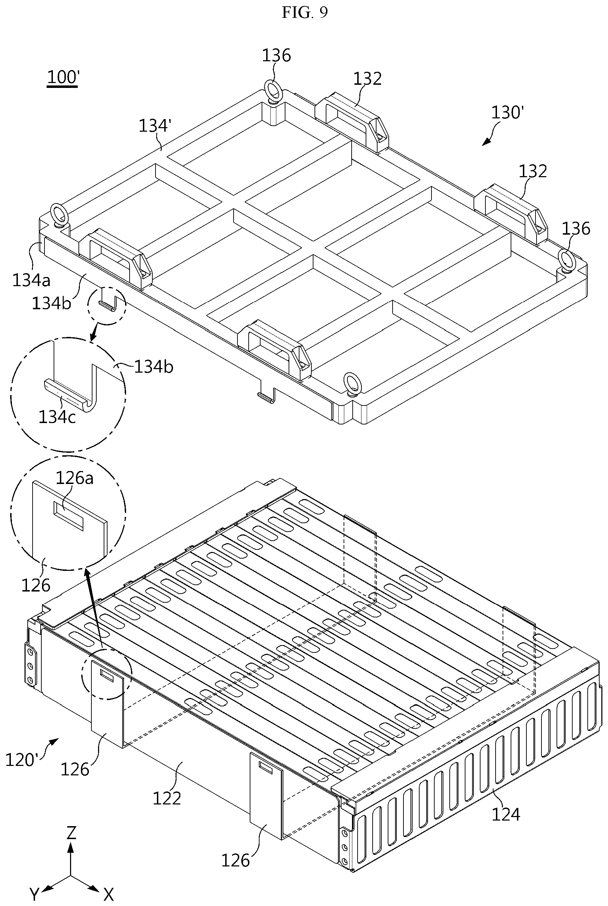

FIG. 9 is a diagram illustrating a state in which a transport structure 130' is separated from the battery assembly shown in FIG. 8

As shown in FIGS. 8 and 9, the battery assembly 100' according to the invention includes a plurality of cell units 110, a support structure 120', and a transport structure 130'.

Hereinafter, the battery assembly 100' will be described based on differences from the battery assembly 100 described with reference to FIGS. 1 to 7.

The support structure 120' is configured to support a plurality of cell units 110 to maintain the stacked state of the plurality of cell units 110. To this end, the support structure 120' includes side walls 122, integrated end covers 124, and support bands 126.

The side walls 122 and the integrated end covers 124 may be disposed along the lateral perimeter of the plurality of cell units 110 stacked on each other. To this end, the support structure 120' may include a pair of side walls 122 and a pair of integrated end covers 124, respectively.

In this case, the side walls 122 may be configured such that each of them is disposed at both ends of the plurality of cell units 110 in the width direction (Y-axis direction) or stacking direction of the plurality of cell units 110, thereby supporting the plurality of cell units 110.

That is, among the pair of side walls 122, a first side wall is disposed adjacent to a first cell unit located at the outermost on one side of the plurality of cell units 110, and a second side wall is disposed adjacent to a second cell unit located at the outermost on the other side of the plurality of cell units 110.

The side walls 122, together with the integrated end covers 124 to be described later, bring the plurality of cell units 110 into close contact with each other to form a single cell unit block capable of being handled simultaneously. In this case, the side walls 122 may evenly distribute the pressure applied to the plurality of cell units 110 throughout the cell units 110.

Each of the integrated end covers 124 may be disposed at both ends of the plurality of cell units 110 in the longitudinal direction (X-axis direction) of the plurality of cell units 110. In addition, the integrated end cover 124 is configured to have one end connected to the first side wall and the other end connected to the second side wall so as to cover all openings of two or more of the cell covers of the plurality of cell units 110.

The support band 126 is configured to have one end in close contact with the first side wall of the pair of side walls 122 and the other end in close contact with the second side wall thereof, thereby supporting the plurality of cell units 110.

The transport structure 130' has at least one handle 132 and is configured to be detachably mounted to the support structure 120'. The transport structure 130' mounted to the support structure 120' may be configured to be located at the upper end of the plurality of cell units 110.

To this end, the support band 126 of the support structure 120' includes a coupling portion 126a provided at both ends thereof so as to be detachably coupled to the transport structure 130'. In this case, the coupling portion 126a of the support band 126 and the transport structure 130' may be coupled in various ways of enabling easy coupling and separation.

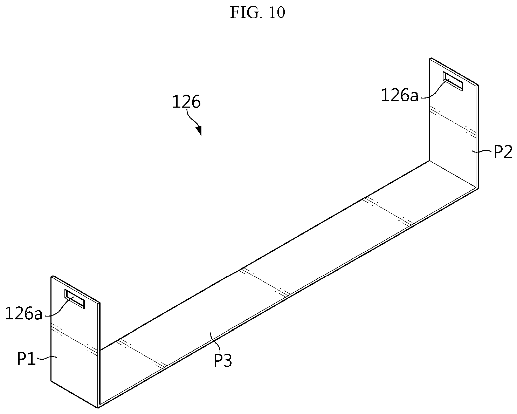

FIG. 10 is a diagram illustrating the support band 126 of the battery assembly shown in FIG. 8.

As shown in FIG. 10, the support band 126 has one end P1 in close contact with a first side wall located on one side of the plurality of cell units 110, the other end P2 in close contact with a second side wall located on the other side of the plurality of cell units 110, and a central portion P3 that connects one end P1 and the other end P2 and supports the lower end of the plurality of cell units 110.

In addition, coupling portions 126a are provided at both ends P1 and P2 of the support band 126, respectively, so as to be detachably connected to the transport structure 130'.

Referring back to FIGS. 8 and 9, the transport structure 130' may be detachably mounted to the support structure 120' so as to be held by an operator carrying the battery assembly 100' or connected to a predetermined transport device that lifts and transfers the battery assembly 100'.

To this end, the transport structure 130' may include at least one handle 132 and a coupling frame 134' that supports the handle 132 and is detachably coupled to the support structure 120'.

The handle 132 may be configured to facilitate the operator to hold the battery assembly or connection with a transport device.

The coupling frame 134' may be coupled to at least one handle 132 to support the handle 132 and may be configured to be coupled to the support structure 120' in a manner of facilitating coupling and separation.

To this end, the coupling frame 134' may include a main frame 134a to which at least one handle 132 is coupled and a subframe 134b having one end coupled to the main frame 134a and the other end detachably coupled to the support structure 120'. In this case, a corresponding coupling portion 134c, which is detachably coupled to the coupling portion 126a of the support band 126, may be provided at the other end of the subframe 134b.

For example, the coupling portion 126a of the support band 126 may include a coupling hole, and the corresponding coupling portion 134c of the subframe 134b may include a hook that is inserted and coupled into the coupling hole of the coupling portion 126a.

In an embodiment, the transport structure 130' may include a link unit 136 that is linked to a transport device for transporting the battery assembly 100'. In this case, the link unit 136 may be configured in a ring structure to be linked to a ring or hook of the corresponding transport device.

As mentioned above, the transport structure 130' may be detached and removed from the battery assembly 100' after the transport or installation of the battery assembly 100' is completed.

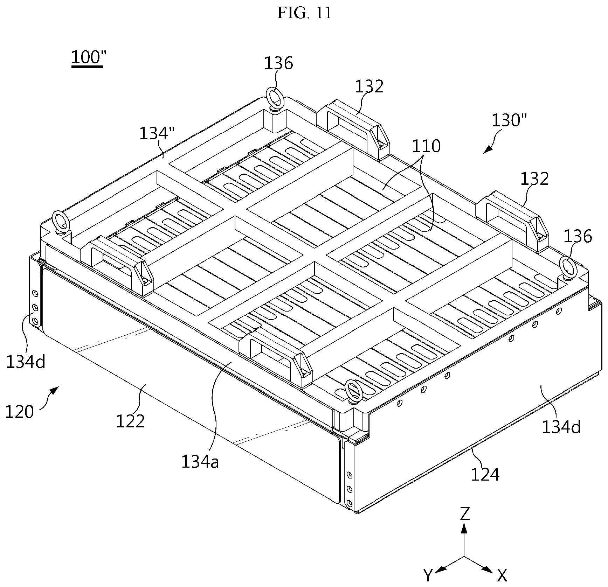

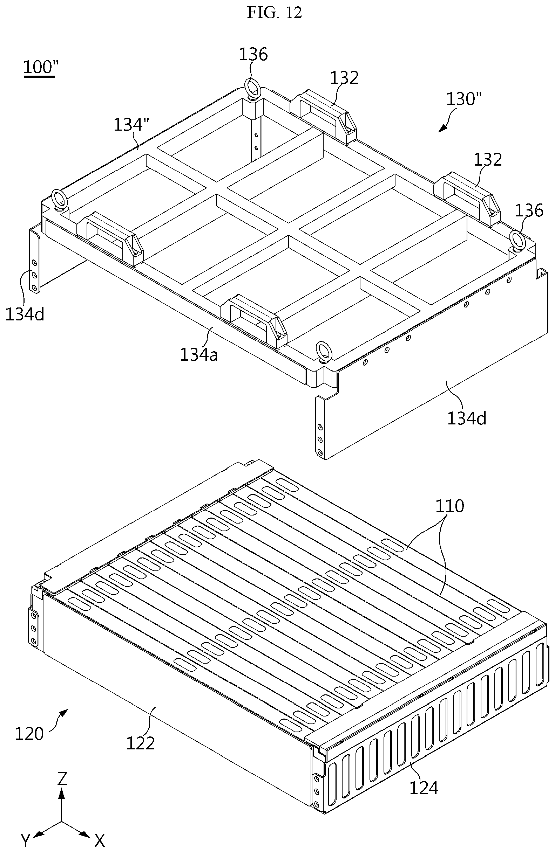

FIG. 11 is a diagram illustrating a battery assembly 100" according to another embodiment of the present disclosure (but not according to the invention). FIG. 12 is a diagram illustrating a state in which a transport structure 130" is separated from the battery assembly shown in FIG. 11.

Referring to FIGS. 11 and 12, the battery assembly 100" according to another embodiment of the present disclosure includes a plurality of cell units 110, a support structure 120, and a transport structure 130".

Hereinafter, the battery assembly 100" will be described based on differences from the battery assembly 100 described with reference to FIGS. 1 to 7.

The support structure 120 is configured to support a plurality of cell units 110 to maintain the stacked state of the plurality of cell units 110. To this end, the support structure 120 includes side walls 122 and integrated end covers 124.

The side walls 122 and the integrated end covers 124 may be disposed along the lateral perimeter of the plurality of cell units 110 stacked on each other. To this end, the support structure 120 may include a pair of side walls 122 and a pair of integrated end covers 124, respectively.

In this case, the side walls 122 may be configured such that each of them is disposed at both ends of the plurality of cell units 110 in the width direction (Y-axis direction) or stacking direction of the plurality of cell units 110, thereby supporting the plurality of cell units 110.

That is, among the pair of side walls 122, a first side wall may be disposed adjacent to a first cell unit located at the outermost on one side of the plurality of cell units 110, and a second side wall may be disposed adjacent to a second cell unit located at the outermost on the other side of the plurality of cell units 110.

Each of the integrated end covers 124 may be disposed at both ends of the plurality of cell units 110 in the longitudinal direction (X-axis direction) of the plurality of cell units 110. In addition, the integrated end cover 124 is configured to have one end connected to the first side wall and the other end connected to the second side wall so as to cover all openings of two or more of the cell covers of the plurality of cell units 110.

The transport structure 130" has at least one handle 132 and is configured to be detachably mounted to the support structure 120. The transport structure 130" mounted to the support structure 120 may be configured to be located at the upper end of the plurality of cell units 110.

This transport structure 130" may be detachably mounted to the support structure 120 so as to be held by an operator transporting the battery assembly 100" or connected to a predetermined transport device that lifts and transports the battery assembly 100".

To this end, the transport structure 130" may include at least one handle 132 and a coupling frame 134" that supports the handle 132 and is detachably coupled to the support structure 120.

The handle 132 may be configured to facilitate the operator to hold the battery assembly or connection with a transport device.

The coupling frame 134" may be coupled to at least one handle 132 to support the handle 132 and may be configured to be coupled to the support structure 120 in a manner of facilitating coupling and separation.

To this end, the coupling frame 134" may include a main frame 134a to which at least one handle 132 is coupled and a subframe 134b having one end coupled to the main frame 134a and the other end detachably coupled to the support structure 120. In this case, the subframe 134d may also be referred to as a bracket.

This subframe 134b may be coupled to the side wall 122 or the integrated end cover 124 of the support structure 120 by fastening members such as hooks, screws, or bolts.

In an embodiment, the transport structure 130" may include a link unit 136 that is linked to a transport device that transports the battery assembly 100". In this case, the link unit 136 may be configured in a ring structure to be linked to a ring or hook of the corresponding transport device.

As mentioned above, the transport structure 130" may be detached and removed from the battery assembly 100" after the transport or installation of the battery assembly 100" is completed.

The battery assemblies 100, 100', and 100" according to the various embodiments described above may be scaled up by increasing the number of cell units 110, respectively.

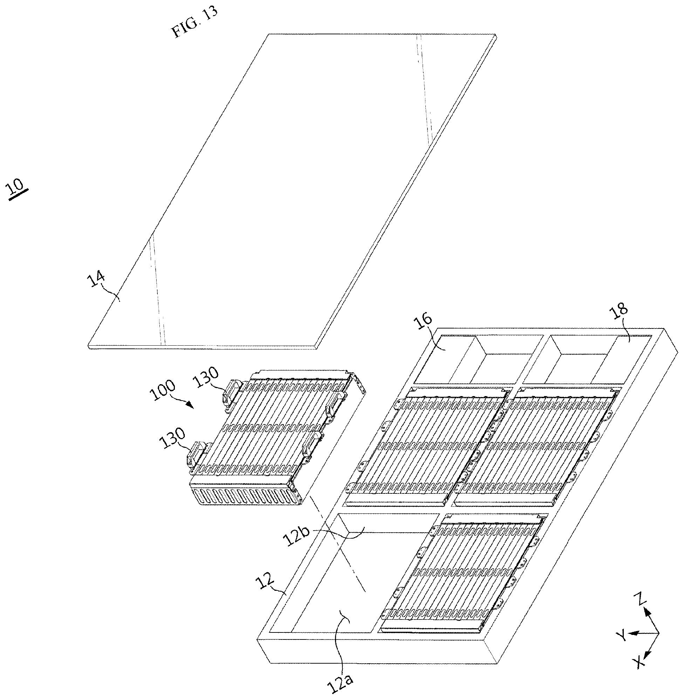

FIG. 13 is a diagram illustrating a battery pack 10 according to an embodiment of the present disclosure.

As shown in FIG. 13 (not according to the invention), the battery pack 10 may include at least one battery assembly 100 according to an embodiment of the present disclosure, and a pack case 12 and 14 for accommodating the battery assembly 100. Although it is illustrated in FIG. 13 that the battery pack 10 includes the battery assembly 100 related to FIGS. 1 to 7, the battery pack 10 may also include the battery assembly 100' or 100" according to other embodiments of the present disclosure, replacing the battery assembly 100 or along with battery assembly 100.

The pack case 12 and 14 may include a pack tray 12 that accommodates a plurality of battery assemblies 100, and a pack lid 14 that covers the upper opening of the pack tray 12.

The pack tray 12 may have an accommodation room 12a where the battery assembly 100 is directly seated without a separate case. To this end, the pack tray 12 may include cross beams 12b that divide its internal space into a plurality of accommodation rooms.

Meanwhile, in the case where the battery assembly 100' related to FIGS. 8 to 10 is accommodated in the pack tray 12, a seating groove into which the support band 130 of the battery assembly 100 is inserted so as to be seated thereon may be provided on the wall surface and bottom surface of the accommodation room 12a where the battery assembly 100' is accommodated.

Meanwhile, when the battery assembly 100 is seated in the corresponding accommodation room of the pack tray 12, the transport structure 130 mounted to the battery assembly 100 may be detached and removed.

In an embodiment, the battery pack 10 may further include a control module 16. This control module 16 may include a BMS (Battery Management System) that manages charging and discharging operations, SOC (state-of-charge), SOH (state-of-health), etc. of the battery cells included in the battery assembly, and may be installed in the internal space of the pack case 12 and 14.

In addition, the battery pack 10 may further include a switching unit 18. This switching unit 18 may be configured to control electrical connection between the battery pack 10 and an external circuit. To this end, the switching unit 18 may optionally include a current sensor, a power relay, a fuse, and the like.

Hereinafter, a method of manufacturing a battery pack according to an embodiment of the present disclosure will be described.

A method of manufacturing a battery pack according to an embodiment of the present disclosure may include a cell unit manufacturing step, a cell unit block manufacturing step, a transport structure mounting step, a battery assembly seating step, and a transport structure removal step.

First, in the cell unit manufacturing step, as described above, at least one battery cell 200 is inserted into the slot of the cell cover 112 to configure the cell unit 110.

Next, in the cell unit block manufacturing step, the support structure 120 including a pair of side walls 122 and a pair of integrated end covers 130 is coupled to a plurality of cell units 110 to support the plurality of cell units 110, thereby configuring a cell unit block.

Next, in the transport structure mounting step, the transport structure 130 is detachably mounted to the support structure 120 to configure a battery assembly 100.

Next, in the battery assembly seating step, the battery assembly 100 is transported by an operator or a predetermined transport device and placed in the corresponding accommodation room of the pack tray 12.

Next, in the transport structure removal step, the transport structure 130 mounted to the support structure 120 of the battery assembly 100 is detached and removed, and the pack lid 14 is coupled to the pack tray 12, closing the opening of the pack tray 12.

As described above, the transport structure capable of being mounted and detached may be coupled to the cell unit block, thereby facilitating the handling and installation of the battery cells mounted to the battery pack. In addition, after the cell unit block is seated in the pack case 12, the handle units coupled to the cell unit block may be separated and removed, thereby simplifying and lightening the structures required for installation of the battery cell and reducing manufacturing costs.

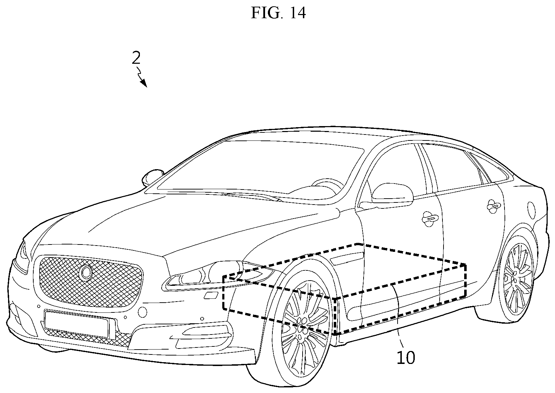

FIG. 14 is a diagram illustrating a vehicle 2 according to an embodiment of the present disclosure.

As shown in FIG. 14, the vehicle 2 according to an embodiment of the present disclosure may include one or more battery assemblies 100, 100', and 100" according to various embodiments described above or battery packs 10 including the battery assemblies 100, 100', and 100".

As described above, the battery assemblies 100, 100', and 100" or the battery packs 10 provided in the vehicle 2 may provide electrical energy required for various operations of the vehicle 2.

For reference, the battery assembly according to the present disclosure may be applied to a battery pack used in various electrical devices or electrical systems other than vehicles, and may also be applied to a battery module that is accommodated in such a battery pack or the rack of an ESS (Energy Storage System) using a separate case.

As described above, according to the present disclosure, multiple battery cells may be configured as a single battery assembly capable of being handled simultaneously by a simplified support structure, thereby facilitating handling of the battery cells and reducing the overall weight and volume of an electrical device including the multiple battery cells, and increasing the energy density of the electrical device.

In addition, the battery assembly may include a transport structure with a handle, which is detachable after installation of the battery assembly, thereby facilitating handling, transportation, and installation of the battery assembly, simplifying and lightening the electrical device to which the battery assembly is mounted, and increasing manufacturing efficiency.

In addition, since multiple battery cells are partially covered by a cell cover in a simplified structure and directly mounted in a case of a corresponding electrical device, instead of being accommodated in a separate case and then reinstalled into the case of the electrical device, it is possible to further reduce the overall weight and volume of the electrical device, further improve the energy density of the battery pack, prevent damage to the battery cells, which is caused during the process of installing the multiple battery cells directly in the case and using the same, and facilitate the swelling control of the battery cells and the design of gas venting paths.

Furthermore, it goes without saying that the embodiments according to the present disclosure are able to solve various technical problems other than those mentioned in this specification in the relevant technical field as well as related technical fields.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the invention is shown in the claims, and all differences within the scope thereto should be construed as being included in the present invention.

## Claims

1. A battery assembly (100) comprising:
a plurality of stacked cell units (110) each comprising at least one battery cell (200); and
a support structure (120) configured to support the plurality of cell units and maintain a stacked state of the plurality of cell units,
wherein the support structure (120) comprises a coupling portion (126a) configured to be coupled to a transport structure (130') used to transport the plurality of cell units,
wherein each of the plurality of cell units (110) further comprises
a cell cover (112) having a slot (112a) into which the at least one battery cell (200) is inserted and an opening (112b) through which an electrode lead (202) of the at least one battery cell inserted into the slot is exposed, and covering the at least one battery cell inserted into the slot, wherein the support structure (120) comprises:
a first side wall (122) disposed adjacent to a first cell unit located at the outermost on one side of the plurality of cell units (110);
a second side wall (122) disposed adjacent to a second cell unit located at the outermost on the other side of the plurality of cell units (110); and
an integrated end cover (124) having one end connected to the first side wall and the other end connected to the second side wall and configured to cover all openings (112b) of two or more of the cell covers (112) of the plurality of cell units (110) **characterized in that** the support structure (120) further comprises:
a support band (126) having one end in close contact with the first side wall (122) and the other end in close contact with the second side wall (122) so as to support the plurality of cell units (110) wherein the coupling portion (126a) of the support structure is configured to be provided at both ends of the support band (126) and to be detachably coupled to the transport structure (130').

2. The battery assembly according to claim 1,
wherein the cell cover (112) further comprises
at least one vent portion (112c) configured to vent gas from the at least one battery cell (200) inserted into the slot.

3. The battery assembly according to claim 1,
wherein each of the plurality of cell units (110) further comprises:
a bus bar (114) electrically connected to the electrode lead (202); and
a bus bar frame (116) disposed at the opening (112b) of the cell cover (112) and supporting the bus bar.

4. The battery assembly according to claim 1,
wherein the integrated end cover (124) comprises:
a main body portion configured to cover the openings (112b); and
a support portion (124c) extending from the main body portion toward the lower end of the plurality of cell units (110) to support the lower end of the plurality of cell units, and
wherein the transport structure (130) coupled to the coupling portion (122b) of the support structure is configured to be located at the upper end of the plurality of cell units (110).

5. The battery assembly according to claim **1,**
wherein the integrated end cover (124) has vent holes (124b) for venting gas at respective portions of the integrated end cover corresponding to the openings.

6. The battery assembly according to claim **1,**
wherein the transport structure (130') has at least one handle (132) and is configured to be coupled to the coupling portion (126a) of the support structure (120).

7. The battery assembly according to claim 6,
wherein the transport structure (130') comprises
a coupling frame (134) coupled to the at least one handle (132) to support the at least one handle, and detachably coupled to the coupling portion (126a) of the support structure (120).

8. The battery assembly according to claim 7,
wherein the coupling frame (134) comprises:
a main frame (134a) to which the at least one handle (132) is coupled; and
a subframe (134b) having one end coupled to the main frame and the other end detachably coupled to the coupling portion (126a) of the support structure.

9. The battery assembly according to claim 1,
wherein the at least one battery cell (200) is configured as a pouch-type secondary battery.

10. A battery pack comprising the battery assembly (100) according to any one of claims 1 to 9.

11. A vehicle comprising the battery assembly (100) according to any one of claims 1 to 9.

## Patentansprüche

1. Batterieanordnung (100), umfassend:
eine Vielzahl von gestapelten Zelleinheiten (110), die jeweils mindestens eine Batteriezelle (200) umfassen;
und
eine Stützstruktur (120), die konfiguriert ist, um die Vielzahl von Zelleinheiten zu stützen und einen gestapelten Zustand der Vielzahl von Zelleinheiten aufrechtzuerhalten,
wobei die Stützstruktur (120) einen Kupplungsabschnitt (126a) umfasst, der konfiguriert ist, um mit einer Transportstruktur (130') gekoppelt zu werden, die zum Transportieren der Vielzahl von Zelleinheiten verwendet wird,
wobei jede der Vielzahl von Zelleinheiten (110) ferner
eine Zellenabdeckung (112) umfasst, die einen Schlitz (112a), in den die mindestens eine Batteriezelle (200) eingesetzt ist, und eine Öffnung (112b) aufweist, durch die eine Elektrodenleitung (202) der mindestens einen in den Schlitz eingesetzten Batteriezelle freigelegt ist, und die die mindestens eine in den Schlitz eingesetzte Batteriezelle abdeckt, wobei die Stützstruktur (120) umfasst:
eine erste Seitenwand (122), die angrenzend an eine erste Zelleinheit angeordnet ist, die sich am äußersten auf einer Seite der Vielzahl von Zelleinheiten (110) befindet;
eine zweite Seitenwand (122), die angrenzend an eine zweite Zelleinheit angeordnet ist, die sich am äußersten auf der anderen Seite der Vielzahl von Zelleinheiten (110) befindet; und
eine integrierte Endabdeckung (124), die ein mit der ersten Seitenwand verbundenes Ende und das mit der zweiten Seitenwand verbundene andere Ende aufweist und konfiguriert ist, um alle Öffnungen (112b) von zwei oder mehr der Zellenabdeckungen (112) der Vielzahl von Zelleinheiten (110) abzudecken,
**dadurch gekennzeichnet, dass** die Stützstruktur (120) ferner umfasst:
ein Stützband (126), das ein Ende in engem Kontakt mit der ersten Seitenwand (122) und das andere Ende in engem Kontakt mit der zweiten Seitenwand (122) aufweist, um so die Vielzahl von Zelleinheiten (110) zu stützen, wobei der Kupplungsabschnitt (126a) der Stützstruktur konfiguriert ist, um an beiden Enden des Stützbandes (126) vorgesehen zu sein und lösbar mit der Transportstruktur (130') gekoppelt zu sein.

2. Batterieanordnung nach Anspruch 1,
wobei die Zellenabdeckung (112) ferner mindestens einen Entlüftungsabschnitt (112c) umfasst, der konfiguriert ist, um Gas aus der mindestens einen in den Schlitz eingesetzten Batteriezelle (200) zu entlüften.

3. Batterieanordnung nach Anspruch 1,
wobei jede der Vielzahl von Zelleinheiten (110) ferner umfasst:
eine Sammelschiene (114), die elektrisch mit der Elektrodenleitung (202) verbunden ist; und
einen Sammelschienenrahmen (116), der an der Öffnung (112b) der Zellenabdeckung (112) angeordnet ist und die Sammelschiene stützt.

4. Batterieanordnung nach Anspruch 1,
wobei die integrierte Endabdeckung (124) umfasst:
einen Hauptkörperabschnitt, der konfiguriert ist, um die Öffnungen (112b) abzudecken; und
einen Stützabschnitt (124c), der sich vom Hauptkörperabschnitt zum unteren Ende der Vielzahl von Zelleinheiten (110) hin erstreckt, um das untere Ende der Vielzahl von Zelleinheiten zu stützen,
und
wobei die Transportstruktur (130), die mit dem Kupplungsabschnitt (122b) der Stützstruktur gekoppelt ist, konfiguriert ist, um sich am oberen Ende der Vielzahl von Zelleinheiten (110) zu befinden.

5. Batterieanordnung nach Anspruch 1,
wobei die integrierte Endabdeckung (124) Entlüftungslöcher (124b) zum Entlüften von Gas an jeweiligen Abschnitten der integrierten Endabdeckung aufweist, die den Öffnungen entsprechen.

6. Batterieanordnung nach Anspruch 1,
wobei die Transportstruktur (130') mindestens einen Griff (132) aufweist und konfiguriert ist, um mit dem Kupplungsabschnitt (126a) der Stützstruktur (120) gekoppelt zu werden.

7. Batterieanordnung nach Anspruch 6,
wobei die Transportstruktur (130')
einen Kupplungsrahmen (134) umfasst, der mit dem mindestens einen Griff (132) gekoppelt ist, um den mindestens einen Griff zu stützen, und lösbar mit dem Kupplungsabschnitt (126a) der Stützstruktur (120) gekoppelt ist.

8. Batterieanordnung nach Anspruch 7,
wobei der Kupplungsrahmen (134) umfasst:
einen Hauptrahmen (134a), mit dem der mindestens eine Griff (132) gekoppelt ist; und
einen Unterrahmen (134b), dessen eines Ende mit dem Hauptrahmen gekoppelt ist und dessen anderes Ende lösbar mit dem Kupplungsabschnitt (126a) der Stützstruktur gekoppelt ist.

9. Batterieanordnung nach Anspruch 1,
wobei die mindestens eine Batteriezelle (200) als eine Sekundärbatterie vom Pouch-Typ konfiguriert ist.

10. Batteriepack, umfassend die Batterieanordnung (100) nach einem der Ansprüche 1 bis 9.

11. Fahrzeug, umfassend die Batterieanordnung (100) nach einem der Ansprüche 1 bis 9.

## Revendications

1. Ensemble de batterie (100) comprenant :
une pluralité d'unités de cellules empilées (110) comprenant chacune au moins une cellule de batterie (200) ;
et
une structure de support (120) configurée pour supporter la pluralité d'unités de cellules et maintenir un état empilé de la pluralité d'unités de cellules,
dans lequel la structure de support (120) comprend une partie de couplage (126a) configurée pour être couplée à une structure de transport (130') utilisée pour transporter la pluralité d'unités de cellules,
dans lequel chacune de la pluralité d'unités de cellules (110) comprend en outre un couvercle de cellule (112) ayant une fente (112a) dans laquelle l'au moins une cellule de batterie (200) est insérée et une ouverture (112b) à travers laquelle un fil d'électrode (202) de l'au moins une cellule de batterie insérée dans la fente est exposé, et recouvrant l'au moins une cellule de batterie insérée dans la fente, dans lequel la structure de support (120) comprend :
une première paroi latérale (122) disposée de manière adjacente à une première unité de cellule située à l'extrême périphérie d'un côté de la pluralité d'unités de cellules (110);
une seconde paroi latérale (122) disposée de manière adjacente à une seconde unité de cellule située à l'extrême périphérie de l'autre côté de la pluralité d'unités de cellules (110); et
un couvercle d'extrémité intégré (124) ayant une extrémité connectée à la première paroi latérale et l'autre extrémité connectée à la seconde paroi latérale et configuré pour couvrir toutes les ouvertures (112b) de deux ou plusieurs des couvercles de cellule (112) de la pluralité d'unités de cellules (110)
**caractérisé en ce que** la structure de support (120) comprend en outre :
une bande de support (126) ayant une extrémité en contact étroit avec la première paroi latérale (122) et l'autre extrémité en contact étroit avec la seconde paroi latérale (122) de manière à supporter la pluralité d'unités de cellules (110) dans lequel la partie de couplage (126a) de la structure de support est configurée pour être prévue aux deux extrémités de la bande de support (126) et pour être couplée de manière amovible à la structure de transport (130').

2. Ensemble de batterie selon la revendication 1,
dans lequel le couvercle de cellule (112) comprend en outre au moins une partie d'évent (112c) configurée pour évacuer le gaz de l'au moins une cellule de batterie (200) insérée dans la fente.

3. Ensemble de batterie selon la revendication 1,
dans lequel chacune de la pluralité d'unités de cellules (110) comprend en outre :
une barre omnibus (114) connectée électriquement au fil d'électrode (202) ; et
un cadre de barre omnibus (116) disposé au niveau de l'ouverture (112b) du couvercle de cellule (112) et supportant la barre omnibus.

4. Ensemble de batterie selon la revendication 1,
dans lequel le couvercle d'extrémité intégré (124) comprend :
une partie de corps principal configurée pour couvrir les ouvertures (112b) ; et
une partie de support (124c) s'étendant de la partie de corps principal vers l'extrémité inférieure de la pluralité d'unités de cellules (110) pour supporter l'extrémité inférieure de la pluralité d'unités de cellules, et
dans lequel la structure de transport (130) couplée à la partie de couplage (122b) de la structure de support est configurée pour être située à l'extrémité supérieure de la pluralité d'unités de cellules (110).

5. Ensemble de batterie selon la revendication 1,
dans lequel le couvercle d'extrémité intégré (124) a des trous d'évent (124b) pour évacuer le gaz au niveau de parties respectives du couvercle d'extrémité intégré correspondant aux ouvertures.

6. Ensemble de batterie selon la revendication 1,
dans lequel la structure de transport (130') a au moins une poignée (132) et est configurée pour être couplée à la partie de couplage (126a) de la structure de support (120).

7. Ensemble de batterie selon la revendication 6,
dans lequel la structure de transport (130') comprend
un cadre de couplage (134) couplé à l'au moins une poignée (132) pour supporter l'au moins une poignée, et couplé de manière amovible à la partie de couplage (126a) de la structure de support (120).

8. Ensemble de batterie selon la revendication 7,
dans lequel le cadre de couplage (134) comprend :
un cadre principal (134a) auquel l'au moins une poignée (132) est couplée ; et
un sous-cadre (134b) ayant une extrémité couplée au cadre principal et l'autre extrémité couplée de manière amovible à la partie de couplage (126a) de la structure de support.

9. Ensemble de batterie selon la revendication 1,
dans lequel l'au moins une cellule de batterie (200) est configurée comme une batterie secondaire de type poche.

10. Bloc-batterie comprenant l'ensemble de batterie (100) selon l'une quelconque des revendications 1 à 9.

11. Véhicule comprenant l'ensemble de batterie (100) selon l'une quelconque des revendications 1 à 9.
